# EUROPEAN PATENT APPLICATION

(11) **EP 1 569 149 A1**
(43) Date of publication of application: **31.08.2005**
(21) Application number: 05009710.4
(22) Date of filing: 01.10.2002
(51) Int. Cl.: G06F 17/60

(54) **Customer relationship management**

(30) Priority: 05.10.2001 US 972277
(62) Divisional of application: 02768942.1
(71) Applicant: Accenture Global Services GmbH, 8200 Schaffhausen (CH)
(72) Inventor: Gottlieb, David M., San Francisco, CA 94122 (US); Hailwood, John W., Torrance, CA 90503 (US)
(74) Representative: Müller-Boré & Partner Patentanwälte

(57) **Abstract**

A framework for customer relationship management includes a first layer to identify platforms for customer interactions and a second layer to identify capabilities of customer interactions. A framework includes a third layer to demonstrate how to knowledge about customer preferences and behaviour can be brought to bear on customer interactions. The framework has a fourth layer to identify applications of analysis and modelling to customer information. The framework also can include backplanes identifying common services that can be tailored to support capabilities described in the first, second, third and fourth layers.

## Description

### BACKGROUND

The invention relates to customer relationship management (CRM).

Customer relationship management relates to acquiring, developing and retaining satisfied, loyal customers. To achieve profitable growth, it generally is desirable for a company to increase the number of profitable customers, to increase the profit from existing customers and to extend the duration of the customer's relationship with the company.

In today's increasingly competitive business environment, a fundamental change has taken place. The emerging global and electronic economy has turned tradition on its head and placed the customer firmly in the control seat, as a result of which power has shifted from the seller to the customer. Customers are more demanding, more aware of their choices, and more in command than ever before. Add the fact that cost-cutting alone will not generate long-term growth, it is clear that CRM is an enterprise-wide imperative.

However, many companies are poorly positioned to capitalize on the opportunity for customer-oriented growth. While some companies have made attempts to implement CRM solutions, they often have not transformed themselves into customer-driven enterprises. The actual results are more often a set of disconnected initiatives that fall short of creating real value.

### SUMMARY

A holistic approach to CRM can allow an enterprise to orchestrate all of the activities that bring it into contact with its customers to deliver a consistently differentiated - and personalized - customer experience, regardless of the interaction channel chosen by the customer. Such an approach can permit enterprises to knit together marketing, sales, and service functions that would traditionally have been pursued in separate, *ad hoc* ways, and therefore constitutes a more comprehensive, methodical approach to identifying, attracting, and retaining the most valuable customers.

The framework for customer relationship management includes a first layer to define platforms for customer interactions and a second layer to define the capabilities of customer interactions. The framework includes a third layer to demonstrate how knowledge about customer preferences and behavior can be brought to bear on customer interactions. This third layer can add value to a business and to its customers by making each interaction timely, relevant and specific to an individual customer. The framework also has a fourth layer to define capabilities for analyzing customer information, understanding customer behavior, creating offers tailored to the needs of specific customer groups, and packaging the marketing communication messages that will accompany customer offers.

The framework also can help define and tailor common enterprise services that are needed to support the capabilities described in the first, second, third and fourth layers.

The framework can be applied in several ways. The framework can be used to build awareness and educate executives or other personnel about customer relationship management. In this instance, the framework can be presented and discussions of customer relationship management can take place based upon the framework.

The framework can be used as an interactive tool to shape a CRM business solution for a particular client. It can be used to analyze an enterprise's relationships with existing customers and to engage the enterprise in further discussion and analysis regarding future relationships. These discussions can result in the definition of a business model defining the customized architectural framework tailored to the needs and capabilities of the particular enterprise.

The framework can provide the basis for a more rigorous, diagnostic analysis of a company to help identify gaps in the company's approach to CRM. In this instance, company data can be assessed based upon the components of the framework to calculate the value to be realized by making changes to the company's structure, processes and technology that affect its customer relationships.

In various applications, one or more of the following advantages may be present. The framework can provide a holistic perspective that allows an organization to consider, in an organized way, the many factors that need to be addressed when implementing a customer relationship management business solution in an effort to become more customer-centric. To truly become customer-centric and achieve the value proposition associated with CRM, businesses should integrate all of the components. For instance, businesses are often challenged to figure out how to connect the knowledge or insight they have built about their customers with the actual interactions that take place with customers. The third layer, intelligent interaction defines key processes and guidelines to connect customer insight with customer interaction capabilities. Many companies understand CRM as a discipline to include simply the automation of customer touch point systems. The solution architecture is designed to show that in order to truly realize the benefits of CRM, the business should evolve its structure, businesses processes and technologies to become customer-centric.

Other features and advantages will be readily apparent from the following detailed description, the accompanying drawings and the claims.

### BRIEF DESCRIPTION OF THE DRAWINGS

FIG. 1 illustrates an architectural framework for customer relationship management.
FIG. 2 illustrates further details of the architectural framework.
FIG. 3 illustrates details of a customer interaction platforms layer in the framework.
FIG. 4 illustrates details of a customer interaction capabilities layer in the framework.
FIG. 5 illustrates details of a customer insight layer in the framework.

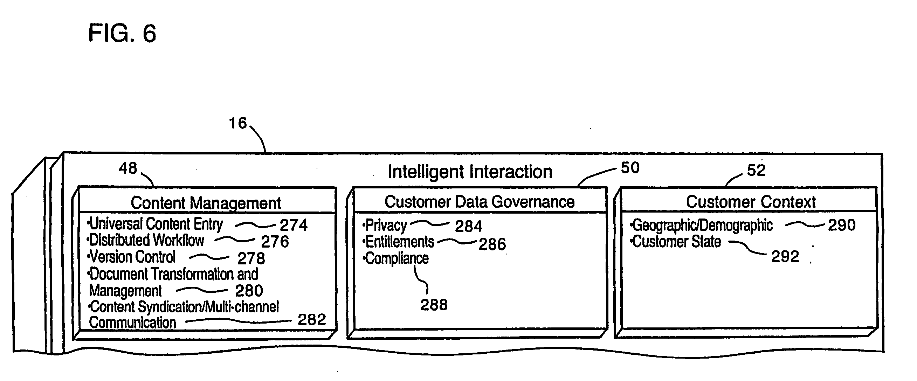

FIG. 6 illustrates details of an intelligent interaction layer in the framework.
FIG. 7 illustrates details of backplanes in the framework.

### DETAILED DESCRIPTION

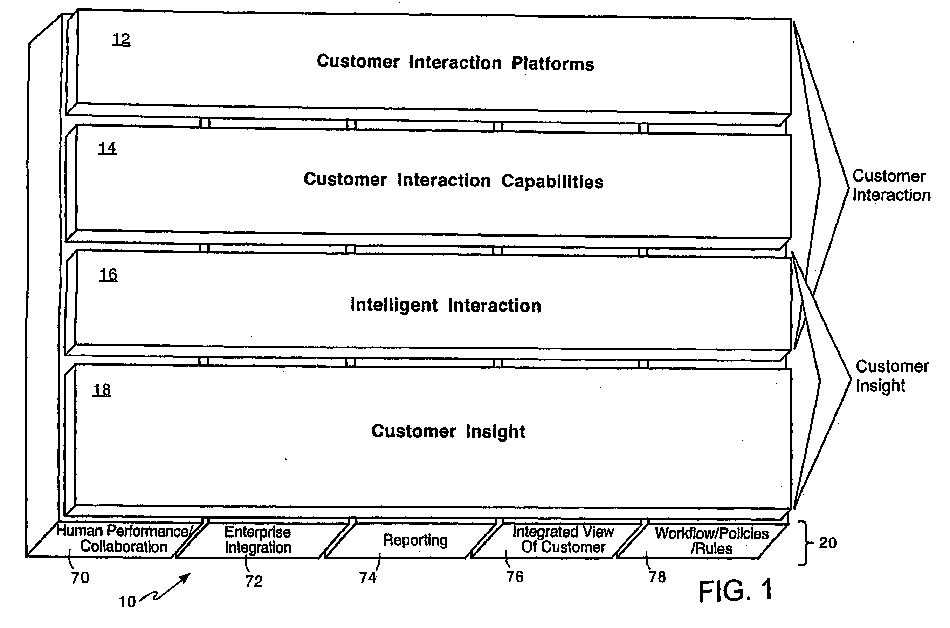

As illustrated in FIG. 1, the framework 10 includes several layers: a customer interaction platforms layer 12, a customer interaction capabilities layer 14, an intelligent interaction layer 16 and a customer insight layer 18. The intelligent interaction layer 16 serves as a linking layer between the customer interaction layers 12, 14 and the customer insight layer 18. Furthermore, the framework 10 includes several backplanes, identified collectively by 20, which identify capabilities that support the other layers.

The first layer of the framework, the customer interaction platforms, identifies the necessary technology infrastructure, applications and business services necessary to conduct business with customers and business partners across all touch points. A business may develop rules that govern which communication channel is appropriate for a particular customer segment, or even individual customers. Typically, these decisions will be made based on customer value. For example, a retail bank may discourage a lower value customer with low account balances from using a high cost channel such as a face-to-face teller by charging an additional fee for this service. The separation of the customer interaction platforms layer from the customer interaction capabilities layer demonstrates that a business can allow a customer to access internal business services from any touch point.

The second layer in the architecture, customer interaction capabilities, defines the set of interaction types in which a company may engage its customers and partners. In the illustrated architecture, these are not linked to a specific channel (with the exception of field service), but are able to be accessed by the customer or partner through its preferred contact method.

The third layer in the architecture, the intelligent interaction layer, demonstrates how a business can bring to bear its corporate memory of customer preferences, behavior and insight to each and every customer interaction. In order to add the most value to a customer interaction, a business should be able to deliver the right content independent of the interaction channel. For example, when a customer is eligible to receive a particular offer because of its affinity score against a response model, the offer should be presented to the customer through any interaction channel that the customer decides to use. This customer may "touch" the business through the company's web site or may contact the business over the phone to reach the customer contact center. The offer the business makes to this customer should be available either as a graphical web page or as a rich text call script for the call center agent. In addition, by scoring the customer's interaction against a response model in real-time, a business can determine whether or not the customer is likely to respond to the offer before it is presented. If the customer scored below a certain threshold, the offer would not be presented, or perhaps a different offer might be substituted. This real-time offer arbitration is how the customer insight within the organization can be bridged to the customer interaction.

The fourth layer in the architecture, customer insight, describes the capabilities an organization should develop to better understand its customers. This includes offline processes such as market research and product/offer development as well as data analysis and modeling.

Additional details of the various layers according to one implementation, as well as details of the backplanes, are discussed below.

### Example of Using the Framework

The framework 10 can provide a holistic approach that allows an organization to consider, in an organized way, the many factors that may impact the management of customer relationships.

To illustrate a particular example, it is assumed in the following discussion that a potential or existing client is interested in learning about how to increase top line revenues and bottom line profits. It is further assumed that sales have been flat and costs have been reduced. The client wants to understand what customer relationship management entails and how it can help improve its business.

For purposes of this example, it is assumed that the client currently sells its product through a sales force working in the field as well as by conducting a telephone sales operation through its customer contact centers located in multiple, geographically disparate areas. It also is assumed that the company recently created a web site through which customers can buy products.

To educate the client about CRM, an overview presentation can be provided to the client describing the concepts, components, and value proposition of CRM. The CRM architecture framework 10 can be used to review the components that make up a CRM business solution and to promote dialogue relating to the client's business. Specific points that may be discussed with the client are presented below.

The client can be encouraged to describe how it segments its customer base, in other words, to identify who are its customers, what they buy and what the client knows about them. The initial discussion also may relate to the company's financial information as it pertains to the customer base, for example, identifying which customer segment contributes the most to the bottom line and which customer segment costs the most.

After presenting and discussing the customer interaction platforms layer 12 and the customer interaction capabilities layer 14, an attempt can be made to identify the capabilities that are delivered to each customer segment and what platforms are used. The discussion can relate to the cost and effectiveness of each of the channels based upon the capability that is being performed and the customer segment being serviced.

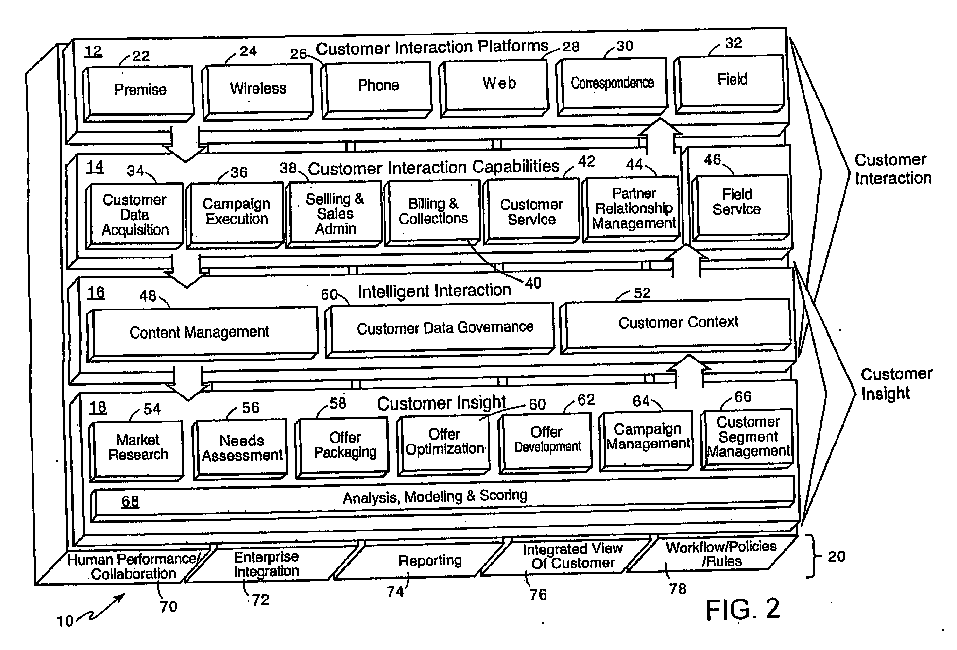

As the intelligent interaction layer 16 is presented to and reviewed with the client, additional details can be gathered about how content is managed and leveraged based upon the customer with whom the client is interacting. Points addressed may relate to the content management capabilities 48 (see FIG. 2), for example, identifying where the content shown to customers and provided to sales representatives comes from, who creates that content, who reviews it, how it is provided to the various applications where it is used and how can it be updated. Other points may relate to identifying how multiple versions of the content are managed and determining whether there are requirements to syndicate the content to any other web sites.

Additional issues addressed as part of a discussion about the intelligent interaction layer 16 may relate to customer data governance capabilities 50 (see FIG. 2). For example, the discussion may address how transaction security is ensured and whether there are any laws or agreements relating to data privacy or entitlements with which the company must comply.

A discussion of the intelligent interaction layer 16 also may relate to the customer context capabilities 52 (FIG. 2). For example, the discussion may address what is known about the customer at each interaction point within each channel and how that knowledge is leveraged to customize the interaction with the customer.

The previous issues discussed in connection with the customer context capabilities can provide a smooth transition to a discussion based on the customer insight layer 18. A discussion about the customer insight layer 18 can identify how the client collects, aggregates, and processes information about its customer base so that interactions can be tailored. It also can identify the ways in which the client develops and executes specific marketing programs based upon those insights.

To conclude the discussion with the client, the backplanes 20 can be presented to and reviewed with the client to obtain an understanding of the infrastructure the client has in place.

A discussion revolving around a presentation of the framework 10 can serve several purposes. It can educate the client on the breadth of CRM and the importance of linking all the components. It also can help the person(s) presenting the framework 10 identify where the greatest areas of opportunity are to help the client improve its business. During follow-up discussions, one or more of the following suggestions may be recommended to the client. A recommendation may be made to initiate a project to address a weakness in the client's customer relationship management capabilities, to conduct a diagnostic project to help pinpoint the areas where the greatest value could be derived if improvements were made, or to carry out further discussions with the client's executive group individually to discuss the concepts presented and build consensus around a recommended project.

The CRM framework 10 can be presented in various formats including, but not limited to, presentations using a laptop or other computer system. For example, the framework can be presented in the form of a spreadsheet or PowerPoint™ presentation. In general, the framework 10 may be presented using computer hardware, firmware and/or software. An article can include a medium that stores a computer program to be executed by a computer processor to facilitate presentation of the framework 10. The information can be stored in various types of memory including, for example, magnetic disks such as internal hard disks and removable disks, magneto-optical disks and CD-ROM disks.

### Customer Interaction Platforms Layer

The customer interaction platforms layer 12 identifies platforms that enable customer interactions across various communications channels. As discussed above, the customer interaction platforms layer 12 identifies the necessary technology infrastructure, applications and business services necessary to conduct business with customers and business partners across all touch points.

As illustrated by FIG. 2, the customer interaction platforms layer 12 can include the following capabilities: premise capabilities 22, wireless capabilities 24, telephone capabilities 26, World Wide Web (web) capabilities 28, correspondence capabilities 30 and field capabilities 32. Each of the capabilities within the customer interaction platforms layer 12 can include one or more features, examples of which are discussed below.

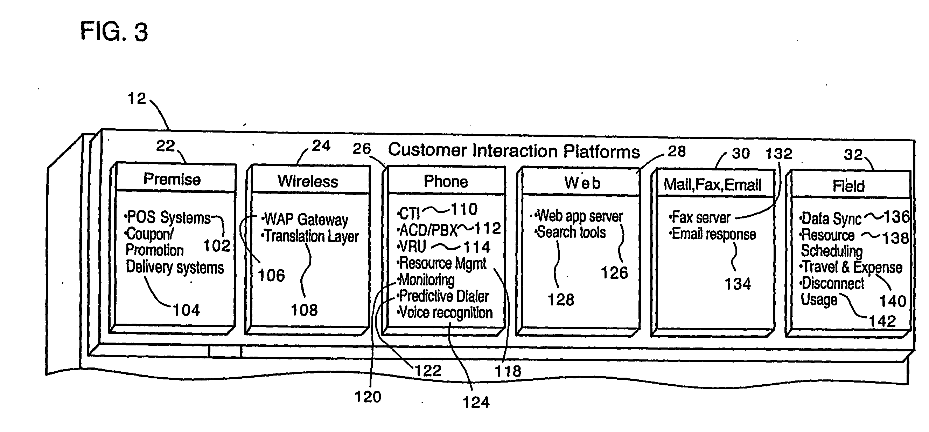

The premise capabilities 22 relate to customer interactions that take place at the customer's premises. As indicated by FIG. 3, the premise capabilities can include the following features: point of sale (PCS) system feature 102 and coupon and promotion delivery system feature 104. The POS system feature 102 refers to customer interactions and transactions at a physical location such as a retail store or kiosk. Systems in the POS environment may capture customer information as well as enable differentiated treatment among customers. The coupon and promotion delivery system feature 104 refers to management of promotional programs such as coupons and rebates.

The wireless capabilities 24 are based on the use of wireless technologies and can include the following features: a Wireless Application Protocol (WAP) gateway feature 106 and a translation layer feature 108. The WAP gateway feature 106 provides a gateway for serving translated data to wireless devices and for accepting input data from wireless devices. The translation layer feature 108 translates existing content into WAP format.

The telephone capabilities 26 are based on the use of telephonic technologies and can include the following features: a computer telephone integration (CTI) feature 110, an automatic call distributor/private branch exchange (ACD/PBX) feature 112. a voice response unit (VRU) feature 114, a resource management feature 118, a monitoring feature 120, a predictive dialer feature 122 and a voice recognition feature 124.

The CTI feature 110 identifies devices that allow telephone calls placed over intelligent peripheral (IP) telephone devices to be connected with a traditional telephone system. For example, a request for information from a web site that is CTI-enabled can be serviced by a customer service representative (CSR) in a call center. The ACD/PBX feature 112 identifies a programmable device that automatically answers calls, place calls in a queue, distributes calls to agents, plays delay announcements to callers and provides real-time and historical reports on those activities. The VRU feature 114 indicates devices that respond to digits entered by a caller and that provide speech recognition capabilities. The resource management feature 118 identifies devices that manage the assignment of resources to work streams to optimize the cost of the resources against service level agreements.

The monitoring feature 120 refers to devices that are able to listen to telephone calls by an agent and monitor quality. Monitoring may be implemented in one of several forms including silent monitoring, side by side monitoring and record and review monitoring. The predictive dialer feature 122 refers to devices that automatically place outbound calls and deliver answered calls to agents. When the dialer detects a busy signal, an answering machine or no answer, it places the dialed number back in a queue. The voice recognition feature 124 indicates devices that are capable of processing voice signals to decipher spoken words and phrases.

The web capabilities 28 are based on the use of Internet or other network technologies and can include the following features; an application server feature 126 and a search tools feature 128. The application server feature 126 refers to a platform from which applications are executed. For example, requests made to an Hypertext Transfer Protocol (HTTP) server typically are forwarded to an application server for execution. The application server also can act as a go-between to legacy systems. The search tools feature 128 identifies tools that perform searches of an entire application architecture, including transaction, content, and application servers.

The correspondence capabilities 30 are based on various forms of written correspondence and can include a facsimile (fax) server feature 132 and an electronic mail (email) response feature 134. The fax server feature 132 identifies systems that manage inbound and outbound fax communications. Facsimile messages may originate with individual employees in an enterprise or through high volume, batch queues. The email response feature 134 refers to systems that handle automatic email assignment and routing as well as matching agents to appropriate incoming.

The field capabilities 32 can include a data synchronization feature 136, a resource scheduling feature 138, a travel and expense feature 140 and a disconnected usage feature 142. The data synchronization feature 136 identifies systems that allow staff in the field to synchronize data from a mobile device with a centralized server. During the synchronization process, a configurable server determines which data to update, delete and backup. The resource scheduling feature 138 refers to systems that allow one to ensure that adequate resources are available in the field to respond to service requests. Scheduling can be optimized using historical data and existing service level agreements (SLAs). The travel and expense feature 140 indicates systems that allow field personnel to track travel-related expenses. The disconnected usage feature 142 identifies systems that allow continued use of an application when it is not connected to a network or central server. A local copy of information that periodically is updated can be provided using a data synchronization device.

In some applications, other capabilities and features may be present within the customer interaction platforms layer 12.

### Customer Interaction Capabilities Layer

As discussed above, the customer interaction capabilities layer 14 defines the set of interaction types in which a company may engage its customers and partners. The customer interaction capabilities layer 14 can include the following capabilities: customer data acquisition 34, campaign execution 36, selling and sales administration 38, billing and collections 40, customer service 42, partner relationship management 44 and field service 46.

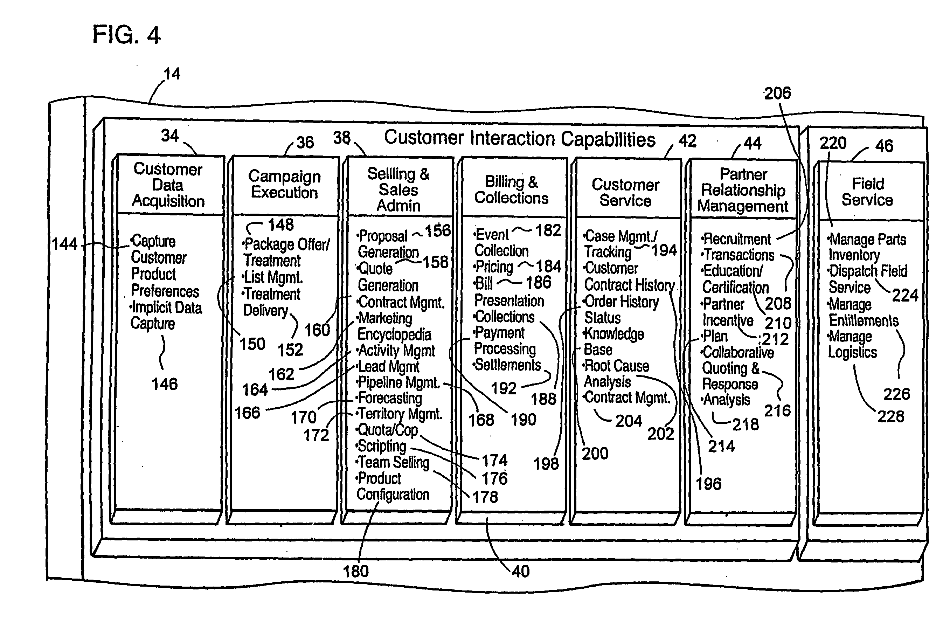

The customer data acquisition capabilities 34 relate to gathering information about customers through interactions with them. Information may be gathered explicitly or implicitly across all channels. As indicated by FIG. 4, the customer data acquisition capabilities can include the following features: a capture customer product preferences feature 144 and an implicit data capture feature 146. The capture customer product preferences feature 144 refers to the capability of acquiring customer product preferences through questionnaires that automatically populate personalization profiles for the customer. The implicit data capture feature 146 refers to the capability of capturing customer preferences and behavior without directly addressing the customer. Examples include background audio capture through call center transactions as well as web site clickstream analysis.

The campaign execution capabilities 36 relate to the packaging and delivery of personalized customer messages and offers through customer channels. Such capabilities can include the following features: a package offer/treatment feature 148, a list management feature 150 and a treatment delivery feature 152. The package offer/treatment feature 148 refers to the capability of assembling the components of a customer offer including market message, visual elements, audio, video, price and text for the channel over which the offer will be delivered. The list management feature 150 refers to developing and marketing target/customer lists into campaign management applications. The treatment delivery feature 152 refers to delivering the offer or treatment to the customer through the channel over which the customer is communicating with the enterprise.

The selling and sales administration capabilities 38 relate to the management and execution of sales activities by the organization and can include the following features: a proposal generation feature 156, a quote generation feature 158, a contract management feature 160, a marketing encyclopedia feature 162, an activity management feature 164, a lead management feature 166 and a pipeline management feature 168. Those features are described below.

The proposal generation feature 156 refers to the capability of facilitating the creation of customized sales proposals and presentations tailored to address customer requirements such as product interest, competitive landscape, and decision criteria. The quote generation feature 158 refers to the capability of facilitating development, submission, revision, and tracking of quotes customized for specific customers. The contract management feature 160 refers to the capability of providing a complete view of a contact including the contact's role in the formal and informal customer organization. It may provide synchronization with other personal information applications.

The marketing encyclopedia feature 162 refers to the capability of providing a central repository for marketing materials including pricing materials, decision support materials, white papers, analytical reports, previous proposals, product information and information about competitors. The activity management feature 164 refers to the capabilities of scheduling lists of items to be performed, mapping best-practices activity plans, managing complex tasks and delegating actions to others or to teams. The lead management feature 166 refers to the ability to track leads from creation through closing. Allowing leads to be distributed, managed, and tracked can help ensure that leads are responded to effectively and in a timely manner. The pipeline management feature 168 refers to the ability to give sales managers access to a complete pipeline analysis, allowing them to run comparisons against sales quotas and other predefined criteria.

The selling and sales administration capabilities 38 also can include a forecasting feature 170, a territory management feature 172, a quota and commissions feature 174, a scripting feature 176, a team selling feature 178 and a product configuration feature 180. The forecasting feature 170 refers to the ability of sales organizations to monitor their potential revenue stream and to pro-actively address trends, shortfalls, and opportunities for increased revenues. The territory management feature 172 refers to capability of organizations to establish business ru les that dictate either manual or automatic routing of opportunities, accounts, contacts, and activities to the appropriate sales team members. The quota and commissions feature 174 refers to the ability to create quota plans with objectives and incentives. The compensation due each employee, reseller, or customer can be calculated based on pre-established criteria. The scripting feature 176 refers to the ability to create scripts which ask appropriate questions and provide information as needed to guide sales personnel through a sequence of steps based on a customer's responses. The team selling feature 178 refers to he capability of giving multiple persons access to information regarding particular opportunities, accounts, and contacts, lead information, quotes, proposals, presentations, and a history of activities. The product configuration feature 180 refers to the capability to configure products by asking customers simple questions and providing the user with various options.

The billing and collections capabilities 40 relate to calculating billing information, presenting that information to customers and accessing historical billing information. The billing and collection capabilities 40 can include the following features: an event collection feature 182, a pricing feature 184, a bill presentation feature 186, a collections feature 188, a payment processing feature 190 and a settlements feature 192.

The event collection feature 182 refers to the ability to manage collection of billable events from internal infrastructure service components and external partners. It also includes the ability to support product code derivation and guide billable events to customer accounts. The pricing feature 184 refers to the ability to manage list and customer-specific pricing, flexible price qualification criteria, contract pricing and flexible price calculation algorithms, as well as multi-level taxation and surcharges on a product or customer-specific basis. The bill presentation feature 186 refers to the ability to prepare and distribute paper-based invoices and on-line invoices, to provide re-prints and historical invoice information upon request, and to provide flexible scheduling for invoice creation and distribution. The collections feature 188 refers to the ability to adjust monetary and non-monetary accounts receivable bill inquiries.

The payment processing feature 190 refers to the ability to support multiple end user payment methods, manage customer receivables and deposits, capture and apply customer payments, and manage account adjustments and refunds as well as tax and surcharge collection and distribution. The payment processing feature 190 also refers to the ability to provide links to corporate back-office systems to manage financial reporting. The settlements feature 192 refers to the ability to support supplier and alliance partner settlement activities including net settlement calculations, invoices, revenue sharing arrangements and reconciliation. The settlements feature 192 also refers to the ability to accept settlement data from third parties and post the data to the appropriate customer accounts.

The customer service capabilities 42 relate to assisting customers with questions and problems across multiple channels and can include the following features: a case management and tracking feature 194, a customer contact history feature 196, an order history and status feature 198, a knowledge base feature 200, a root cause analysis feature 202 and a contract management feature 204.

The case management and tracking feature 194 refers to the ability to manage the processes for registering customer service incidents, tracking and escalating until closure. The customer contact history feature 196 refers to the ability to provide a complete history of the interactions with the customer including inbound and outbound calls, email exchanges, correspondence, visits, meetings, and demonstrations. The order history and status feature 198 refers to the ability to view the status of current orders, as well as history of previous orders. The knowledge base feature 200 refers to the ability to support assisted and customer self-service by capturing and indexing customer service history and product information. The root cause analysis feature 202 refers to the ability to perform an analysis across multiple reported service issues to determine whether an ultimate quality problem is responsible. The contract management feature 204 refers to the ability to ensure that customers receive the proper level of support based on SLAs and other contractual obligations. That feature also refers to the ability to view and manage the details of sales contracts, service agreements and warranties.

The partner relationship management capabilities 44 relate to managing relationships with indirect channel partners, resellers and distributors using multiple customer contact channels. Those capabilities can include the following features: a recruitment feature 206, a transactions feature 208, an education/certification feature 210, a partner incentive management feature 212, a plan feature 214, a collaborative, quoting and response feature 216 and an analysis feature 218.

The recruitment feature 206 refers to the ability to target selected partners, allow partners to complete applications online, and qualify partner applications. The transaction feature 208 refers to the ability to track and locate inventory availability across partner locations, to process payments, manage credit authorization, provide automatic re-order and apply real-time discounts and promotions. The information, education and certification feature 210 refers to the ability to maintain marketing content library and to facilitate the development of partner specific sales and marketing programs. That feature also can include, as part of partner education and certification, the ability to display on-line certification process requirements, to obtain computer based training and self-study material, and to update skills inventory based on completed courses. The partner incentive management feature 212 refers to the ability to display promotions and special programs information and to manage rebate and other promotions. It also may include the ability to distribute and track funding provided to partners. The plan feature 214 refers to the ability to create partner plans by jointly managing and developing marketing programs and campaigns. It also may include the ability, in the case of new product introductions, to collaborate on initial stock and quantity calculations for controlled introduction. The collaboration, quoting and response feature 216 refers to the ability to dynamically generate and provide catalogs, products, services and pricing information based on partner certification. That feature can include the ability to generate on-line quotation and quote status. The analysis feature 128 refers to the ability to report information regarding lead fulfillment, revenue contribution, training certification status and territory analysis.

The field service capabilities 46 relate to meeting customer support needs directly at the customer's location where the product is used or where service is provided. Those capabilities can include the following features: a manage parts inventory feature 220, a dispatch field service feature 222, a manage entitlements feature 224 and a manage logistics feature 226.

The manage parts inventory feature 220 refers to the ability to access to the service parts pipeline, allowing for support organizations to identify bottlenecks reducing the quantity of parts needed on hand. The dispatch field service feature 222 refers to the availability of field resources and the ability to move or re-assign activities based on best skills match, workload or work shift. The manage entitlements feature 224 refers to the ability to keep track of which products are in or out of warrant and the ability to manage multiple tier product warranties and SLAs. The manage logistics feature 226 refers to the ability to automate service logistics such as fulfillment, replenishment and cycle counting by leveraging inventory information.

In some implementations, other capabilities and features may be present within the customer interaction capabilities layer.

### Customer Insight Layer

As discussed above, the customer insight layer 18 (FIG. 1) describes the capabilities an organization should develop to better understand its customers. This includes offline processes such as market research and product/offer development as well as data analytics and modeling. Analysis results can be used pro-actively to drive business decisions and operational CRM processes. Customer value can be enhanced by better understanding and fulfilling consumer desires and needs. As illustrated by FIG. 2, the customer insight layer 18 identifies the following capabilities: market research 54, need assessment 56, offer packaging 58, offer optimization 60, offer development 62, marketing campaign management 64 and customer segment management 66.

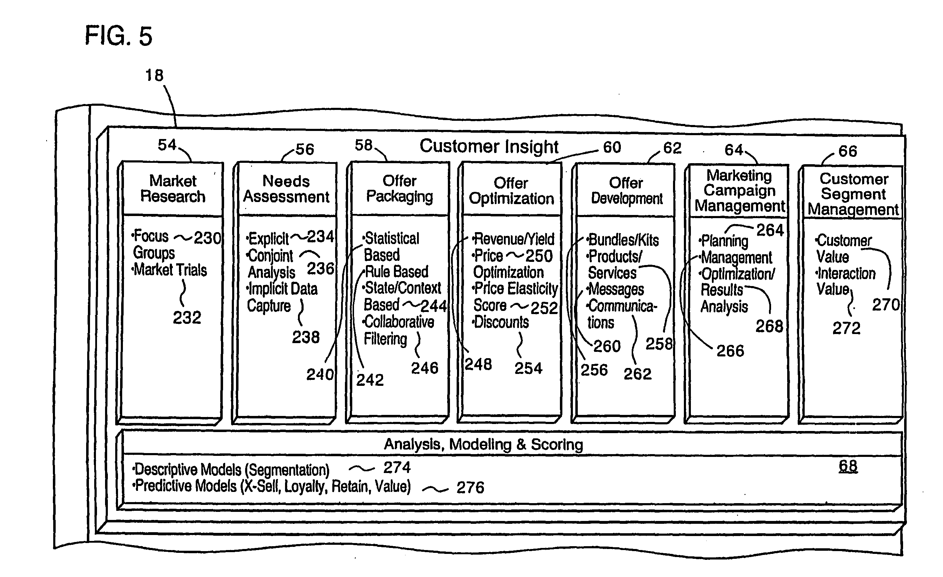

The market research capabilities 54 relate to understanding customer trends and mood in the marketplace. Those capabilities also relate to transforming knowledge captured about customers and markets into new product development and offer development. As illustrated in FIG. 5, the market research capabilities can include the following features: a focus groups feature 230 and a market trials feature 232.

The focus groups 230 feature refers to facilitating the selection of individuals or companies to participate in product and service research. The market trials feature 232 refers to conducting product or service testing in a target marketplace, as well as measuring and analyzing results and providing feedback for product development.

The needs assessment capabilities 56 relate to anticipating the appropriate offer or service based on the requirements of an individual customer. Those capabilities can include the following features: an explicit analysis feature 234, a conjoint analysis feature 236 and an implicit data capture feature 238.

The explicit analysis feature 234 refers to using a customer's specific intentions or product requirements to suggest a set of solutions or products. The conjoint analysis feature 236 refers to the ability to capture customer preferences by asking the customer to make a series of choices that illustrate tradeoffs between various sets of attributes. The implicit data capture feature 238 refers to capturing data through observation of customer behavior.

The offer packaging capabilities 58 relate to collecting and assembling various components of a customer offer including price, product or service, and message based on the delivery channel. The capabilities can include the following features: a statistical based offer packaging feature 240, a rule based offer packaging feature 242, a state and context based offer packaging feature 244 and a collaborative filtering packaging feature 246.

The statistical based offer packaging feature 240 refers to the ability to select and package elements of an offer, including the price and the product or service, and to bundle the elements based on a predictive model score against the customer's attributes. The rule based offer packaging feature 242 refers to the ability to select and package elements of an offer, including the price and the product or service, and to bundle the elements based on a set of predefined, explicit rules. The state and context based offer packaging feature 244 refers to the ability to select and package offer elements based on the context of customer including the customer's location and the number of outstanding service requests. The collaborative filtering packaging feature 246 refers to the ability to select and package elements of an offer, including the price and the product or service, and to bundle the elements based on the purchasing preferences of similar customers.

The offer optimization capabilities 60 relate to tuning the elements of an offer based on a specific customer opportunity and may include choosing an individual offer within a portfolio in real time. The offer optimization capabilities 60 include the following features: a revenue/yield optimization feature 248, a price optimization feature 250, a price elasticity score feature 252 and a discounts feature 254.

The revenue and yield optimization feature 248 refers to the ability to manage product pricing to maximize total available revenue and optimize a multi-variable set including inventory level, inventory velocity, competition and customer demand. The price optimization feature 250 refers to the ability to calculate and deliver the appropriate price for a given offer based on the customer demand, inventory and other supply side factors. The price elasticity scores feature 252 refers to the ability to understand the degree to which a change in the price of a product or service will impact the demand for that product or service. The discounts feature 254 refers to the ability to manage the setting and execution of pricing discounts based on parameters such as order size, product volume and customer lifetime value.

The offer development capabilities 62 relate to processes for constructing a portfolio of offers to be presented to customers. The offer development capabilities 62 include the following features: a bundles/kits feature 256, a products/service feature 258, a messages feature 260 and a communications feature 262.

The bundles and kits feature 256 refers to the ability to create customer solutions by bundling products and/or services directed to specific industry and customer needs. The products and service feature 258 refers to the ability to use customer preference and feedback data to drive product and service development processes. The messages feature 260 refers to the ability to craft customer or industry-specific marketing messages for the offer portfolio. The communications feature 262 refers to the ability to offer specific content across each communication channel.

The marketing campaign management capabilities 64 relate to planning, designing and tracking results of marketing campaigns. It also may include the ability to target specific customers or groups based on predefined criteria. The marketing campaign management capabilities 64 include the following features: a planning feature 264, a management feature 266 and an optimization/results analysis feature 268.

The planning feature 264 refers to the ability to organize components of a marketing campaign such as the customer segment, an offer and a channel. The management feature 266 refers to the ability to coordinate various stakeholders and contributors in developing a campaign. The results analysis feature 268 refers to capturing customer responses to a marketing campaign and analyzing the overall return relative to cost. The responses can be used to tune subsequent campaigns.

The customer segment management capabilities 66 relate to monitoring and managing the behavior of customers and noting trends at the segment level with the ability to apply those trends to individual customers. Those capabilities can include the following features: a customer value feature 270 and an interaction value feature 272. The customer value feature 270 refers to the ability to manage interactions with customers using a fact-based understanding of the customers' value to the enterprise. The interaction value feature 272 refers to the ability to mange the priority and response to a given interaction based on the potential value of that interaction to the customer and to the enterprise.

The customer insight layer also identifies analysis, modeling and scoring capabilities 68 that can be used in conjunction with any of the previously discussed sub-categories of customer insight capabilities. The analysis, modeling and scoring capabilities 68 can include a descriptive models feature 274 and a predictive models feature 276. The descriptive models feature 274 refers to modeling that enables information discovery by identifying groups and patterns in data sets. An example of a descriptive model is customer segmentation. The predictive models feature 276 refers to statistical modeling that can predict the probability of a desired outcome based on a set of parameters.

In some implementations, other capabilities and features may be present within the customer insight layer.

### Intelligent Interaction Layer

As discussed above, the intelligent interaction layer 16 provides a link between the customer interaction layers 12, 14 and the customer insight layer 18 (FIG. 1). The layer intelligent interaction 16 demonstrates how a business can bring to bear its corporate memory of customer preferences, behavior and insight to each and every customer interaction. Capabilities identified in the intelligent interaction layer can provide the ability to apply knowledge about a customer to a particular interaction and the ability to gain knowledge about the customer that can be applied to future interactions.

As indicated by FIG. 2, the intelligent interaction layer 16 identifies the following capabilities: content management 48, customer data governance 50 and customer context 52.

The content management capabilities 48 relate to managing the creation, distribution and disposition of enterprise content. The capabilities include off-line as well as real-time processes associated with dynamic offer packaging and presentation. The content management capabilities can include the following features: a universal content entry feature 274, a distributed workflow feature 276, a version control feature 278, a document transformation and management feature 280 and a content syndication and multi-channel communication feature 282.

The universal content entry feature 274 refers to the ability to allow any type of content to be entered into a system regardless of format. The distributed workflow feature 276 refers to the ability to establish a series of tasks that must be completed once a piece of content is submitted, but before it becomes accessible. Members completing the workflow tasks are given assigned roles that dictate what actions they can perform on the content. The version control feature 278 refers to the ability to view previous versions of content, revert to previous versions and to track changes to content without impacting the live site. The document transformation and management feature 280 refers to the ability to provide an extensible reformatting of inbound and outbound business documents to allow business transactions to be reformatted to a trading partner's native format. A record of each transformation can be retained. The content syndication and multi-channel communication feature 282 refers to the ability to distribute content to partners by event, schedule or on demand.

The customer data governance capabilities 50 relates to sets of rules and policies associated with the capture, use and distribution of customer data. The rules and policies may be legislated by the government, an industry or an individual company. The customer data governance component 50 can include the following features: a privacy feature 284, an entitlements feature 286 and a compliance feature 288.

The privacy feature 284 refers to the creation of rules and policies that govern the method, depth and type of customer information one is permitted to capture and store across the enterprise. The entitlements feature 286 refers to the creation of ruics and policies that govern how customer information may be distributed and personalized across the enterprise. The compliance feature 288 refers to the ability to demonstrate that a company's actions with respect to customer data are consistent with legislative and regulatory standards for both industry and geography.

The customer context capabilities 52 relate to processes that can help an organization interpret customer intentions. That component can include the following features: a geographic and demographic feature 290 and a customer state feature 292.

The geographic and demographic feature 290 refers to the ability to provide differentiated customer treatment based on one or more information sources including, for example, third party data sources and the integrated view of customer tool discussed below. The customer state feature 292 refers to the ability to provide differentiated customer treatment based on cross functional enterprise data about the customer such as service levels, install base and outstanding service request.

In some implementations, other capabilities and features may be present within the intelligent interaction layer.

### Backplanes

As shown in FIG. 1, the backplanes 20 identify common services that may be used in conjunction with one or more of the other layers 12, 14, 16 and 18. The backplanes 20 include a human performance backplane 70, an enterprise integraton backplane 72, a reporting backplane 74, an integrated customer view backplane 76 and a workflow backplane 78.

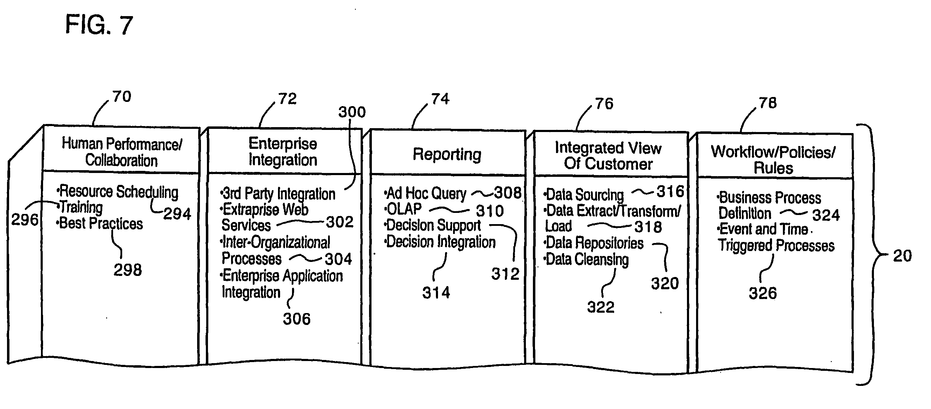

The human performance backplane 70 relates to concepts, principles and tools that allow an organization to optimize the performance of its human resources. Examples of such concepts and principles pertain to areas such as organization design, communications, rewards and recognition, culture, compensation, training and performance management. Examples of such tools include applications that assist with staff and workload balancing, training and business simulation, and collaboration tools. As illustrated in FIG. 7, the human performance backplane 70 includes the following features: a resource scheduling feature 294, a training feature 296 and a best practices feature 298.

The resource scheduling feature 294 refers to managing the number of resources assigned to a given work stream and location to meet identified service level agreements. The training feature 296 refers to tools that help create curriculum and techniques to optimize individual work performance. The best practices feature 298 refers to capturing and deploying the best practices of the industry and the organization.

The enterprise integration backplane 72 identifies processes and technologies that exist in parts of the enterprise outside of CRM, as well as links that connect CRM to other processes and technologies within the enterprise and to other enterprises that act as an extension to the business. As illustrated in FIG. 7, the enterprise integration backplane 72 includes the following features: a third party integration feature 300; an extraprise web services feature 302, an inter-organizational processes feature 304 and an enterprise application integration feature 306.

The third party integration feature 300 refers to associating customer focused business processes of one organization with the business processes of another organization. For example, a distributor may connect its customer support processes with the customer support process of its suppliers to deliver end-customer support. A company also may integrate its outbound marketing processes with its supplier and inventory target setting. The extraprise web services feature 302 refers to deploying an application capability as a service that can be made available, for example over the Internet, to customers to incorporate in their organizations or make available to their customers. The inter-organizational processes feature 304 refers to linking customer processes in an organization to other processes areas such as supply chain and finance. The enterprise application integration feature 306 refers to a common framework for integrating end-to-end business processes and information across disparate applications to increase the organization's ability to respond and adapt to change.

The reporting backplane 74 relates to common processes and technologies that support the execution of both predefined as well as *ad hoc* reports against enterprise data stores. The common reporting capabilities should support multiple user types and groups to provide basic column and row reporting, analytic online analytical processing (OLAP) reporting and executive level dashboard reporting. As shown in FIG. 7, the reporting backplane 74 can include the following features: an *ad hoc* query feature 308, an online analytical processing feature 310, a decision support feature 312 and a decision integration feature 314.

The *ad hoc* query feature 308 refers to tools that support user-driven reporting on database records and may include an end-user layer above the database architecture to support business language report definition. The OLAP feature 310 refers to providing end-users with a facility to analyze row and column reports and can include storing a data set in a multi-dimensional array that stores de-normalized or pre-aggregated data to speed access. The decision support feature 312 refers to applications that analyze information and present it using, tor example, in a manner that supports high-level decision making. The decision integration feature 314 refers to the ability to align an enterprise's overall objectives to various measurements and decisions throughout the enterprise, as well as its customers, suppliers and partners.

The integrated customer view backplane 76 relates to applications, data and processes that are used to build a common view of a customer. The backplane can include applications and services that identify customer data in disparate data sources, acquire and cleanse the data, and normalize and distribute the information to appropriate data storage facilities. Additional analysis of customer information can leverage those services. As shown in FIG. 7, the integrated customer view backplane 76 includes the following features: a data sourcing feature 316, a data extract, transform and load feature 318, a data repositories feature 320 and a data cleansing feature 322.

The data sourcing feature 316 refers to identifying internal and external sources of customer data. The data extract, transform and load feature 318 refers to mapping customer data sources into integrated data models and into client-specific customer databases. It includes the capabilities of data extraction and transformation, address standardization and loading into the target database. The data repositories feature 320 refers to a facility for storage of data as an operational data store (ODS) or in a data mart to support analytic processing. The data cleansing feature 322 refers to making data sets useful by removing duplicate information, identifying deficient data and flagging poor data.

The workflow backplane 78 represents a common environment for defining the execution of business rules and business process flows. The business process abstractions may relate to multiple business systems, organizations and data. As illustrated in FIG. 7, the workflow backplane 78 includes the following features: a business process definition feature 324 and an event and time triggered processes feature 326.

The business process definition feature 324 refers to the ability to model business process flow such as approvals, handoffs and data gathering using, for example, graphical tools. The event and time triggered processes feature 326 refers to designing, implementing and executing business rules and policies that drive application processing. The rules and policies may involve complex branching and conditionals and may impact multiple enterprise applications before completion.

Other services may be incorporated into one or more of the backplanes.

Other applications, layers, capabilities and features are within the scope of the claims.

## Claims

1. A method comprising:
presenting a framework for customer relationship management, the framework including a first layer to identify platforms for customer interactions, a second layer to identify capabilities of customer interactions, a third layer to demonstrate how knowledge about customer preferences and behavior can be brought to bear on customer interactions, and a fourth layer to identify applications of analysis and modeling to customer information; and
discussing customer relationship management based on the framework.

2. The method of claim 1 including using the framework as an interactive tool to shape a customer relationship management solution for a particular enterprise.

3. The method of claim 1 or 2 including using the framework as a basis for a diagnostic analysis of a particular enterprise to identify gaps in the enterprise's approach to customer relationship management.

4. The method of claim 1, 2 or 3 including training personnel in customer relationship management using the framework.

5. The method of any one of claims 1, 2, 3 or 4 wherein:
the first layer defines technology infrastructure, applications and business services for conducting business with customers and business partners across the platforms;
the second layer defines interaction types in which a company may engage its customers and partners;
the third layer identifies how a business can bring to bear its corporate memory of customer preferences, behavior and insight to each customer interaction; and
the fourth layer describes capabilities an entity should develop to better understand its customers.

6. The method of any one of claims 1,2, 3 or 4 wherein the first layer defines technology infrastructure, applications and business services for conducting business with customers and business partners across the platforms.

7. The method of any one of claims 1, 2,3 or 4 wherein the second layer defines interaction types in which a company may engage its customers and partners.

8. The method of any one of claims 1, 2, 3 or 4 wherein the third layer identifies how a business can bring to bear its corporate memory of customer preferences, behavior and insight to each customer interaction.

9. The method of any one of claims 1, 2, 3 or 4 wherein the fourth layer describes capabilities an entity should develop to better understand its customers.

10. The method of claim 5 wherein the first layer identifies platforms that relate to customer interactions that occur at a customer's premises, platforms based on use of wireless technologies, platforms based on use of telephonic technologies, platforms based on use of network technologies, and platforms based on written correspondence.

11. The method of claim 5 or 10 wherein the second layer identifies capabilities that relate to gathering information about customers, capabilities that relate to packaging and delivery of personalized customer messages, capabilities that relate to management and execution of sales activities, capabilities that relate to billing information, capabilities that relate to customer service, capabilities that relate to partner relationship management, and capabilities that relate to field service.

12. The method of claim 5, 10 or 11 wherein the third layer identifies capabilities for managing creation, distribution and disposition of enterprise content, rules and policies associated with capture, use and distribution of customer data, and capabilities relating to processes for interpreting customer intentions.

13. The method of claim 5, 10, 11 or 12 wherein the fourth layer identifies market research capabilities, capabilities that relate to anticipating an offer or service based on requirements of an individual customer, capabilities that relate to collecting and assembling components of a customer offer, capabilities that relate to processes for constructing a portfolio of offers for customers, capabilities that relate to marketing campaign management, and capabilities that relate to monitoring and managing the behavior of segments of customers.

14. The method one of the preceding claims wherein the framework includes backplanes identifying common services that can be defined and tailored to support capabilities described in the first, second, third and fourth layers.

15. The method of claim 14 wherein the common services includes identify capabilities that relate to optimizing performance of an enterprise's human resources, processes and technologies that support execution of reports based on data stores, processes and technologies that exist in parts of the enterprise other than customer relationship management, capabilities for associating customer focused business processes of one organization with business processes of another organization, capabilities for providing a common view of a customer, and capabilities that relate to defining execution of business rules and business process flows.

16. An architectural framework for customer relationship management comprising:
a first layer to identify platforms for customer interactions;
a second layer to identify capabilities of customer interactions;
a third layer to demonstrate how knowledge about customer preferences and behavior can be brought to bear on customer interactions; and
a fourth layer to identify applications of analysis and modeling to customer information.

17. The framework of claim 16 wherein the first layer defines technology infrastructure, applications and business services for conducting business with customers and business partners across the platforms.

18. The framework of claim 16 or 17 wherein the second layer defines interaction types in which a company may engage its customers and partners.

19. The framework of claim 16, 17 or 18 wherein the third layer identifies how a business can bring to bear its corporate memory of customer preferences, behavior and insight to each customer interaction.

20. The framework of claim 16, 17, 18' or 19 wherein the fourth layer describes capabilities an entity should develop to better understand its customers.

21. The framework of claim 16, 17, 18, 19 or 20 wherein:
the first layer defines technology infrastructure, applications and business services for conducting business with customers and business partners across the platforms;
the second layer defines interaction types in which a company may engage its customers and partners;
the third layer identifies how a business can bring to bear its corporate memory of customer preferences, behavior and insight to each customer interaction; and
the fourth layer describes capabilities an entity should develop to better understand its customers.

22. The framework of claim 21 including backplanes identifying common services that can be defined and tailored to support capabilities described in the first, second, third and fourth layers.
